# EUROPÄISCHE PATENTANMELDUNG

(11) **EP 1 699 122 A2**
(43) Veröffentlichungstag der Anmeldung: **06.09.2006**
(21) Anmeldenummer: 06003181.2
(22) Anmeldetag: 16.02.2006
(51) Int. Cl.: H02G 3/08

(54) **Gehäuse für eine Kabelverbindung**

(30) Priorität: 04.03.2005 DE 102005010075
(71) Anmelder: Tyco Electronics Raychem GmbH, 85521 Ottobrunn (DE)
(72) Erfinder: Schulz, Norbert, 81827 München (DE)
(74) Vertreter: Popp, Eugen

(57) **Zusammenfassung**

Die Erfindung bezieht sich auf ein Gehäuse 10 für eine Kabelverbindung mit zumindest einer Gehäuseöffnung 11 zur Durchführung eines oder mehrerer ein- oder mehradriger Kabel, insbesondere Niederspannungskabel, und einem Raum 12 zur Aufnahme der Kabelverbindung, der mit einem Isolationsgel befüllbar ist. Ein Berührungsschutz der im Gehäuse 10 angeordneten Kabelverbindung wird durch eine Sperrplatte 13 zum Verschließen der Gehäuseöffnung 11 erreicht, wobei die Sperrplatte 13 in dem Gehäuse 10 fest verbindbar ist und zumindest eine Plattenöffnung 14 zur Kabeldurchführung aufweist.

## Beschreibung

Die Erfindung bezieht sich auf ein Gehäuse für eine Kabelverbindung mit zumindest einer Gehäuseöffnung zur Durchführung eines oder mehrerer ein - oder mehradriger Kabel, insbesondere Niederspannungskabel, und einem Raum zur Aufnahme der Kabelverbindung, der mit einem Isolationsgel befüllbar ist.

Gehäuse der vorstehend bezeichneten Gattung werden von der Anmelderin hergestellt und vertrieben. Die Funktion dieser Gehäuse besteht hauptsächlich darin, in den Gehäusen angeordnete Kabelverbinderblöcke zu schützen. Außerdem sind diese Gehäuse mit einem Isolationsgel befüllbar, um die darin angeordneten Kabelverbinderblöcke gegen Feuchtigkeit zu isolieren.

Bisher wurden derartige Gehäuse unterirdisch verlegt, so dass für einen ausreichenden mechanischen Schutz zumindest im Bereich der Gehäuseöffnung vergleichsweise dünne Gehäusewände ausreichend waren. Die Stärke dieser Gehäusewände im Bereich der Gehäuseöffnung bzw. deren Festigkeit ist dabei so bemessen, dass diese Wände das in das Gehäuse eingefüllte Isolationsgel zurückhalten.

Neuerdings besteht Bedarf an oberirdisch verlegten Kabelverbindungen, beispielsweise in Gärten zum Anschluss von Außenlampen. Bei oberirdisch verlegten Kabelverbindungen tritt die Gefahr auf, dass insbesondere Kinder mit spitzen Gegenständen die vergleichsweise dünnen Gehäusewandungen durchstechen und dabei in den Bereich des Kabelverbinders gelangen und unisolierte stromführende Kabel berühren, wodurch schwerste Verletzungen auftreten können.

Aus der EP 0646 294 B1 ist ein Gehäuse für eine Kabelspleißverbindung bekannt, das ein durch Druck radial verformbares Dichtelement aufweist, wobei die Dichtmasse des Dichtelementes ein geeignetes Isolationsgel ist. Das Dichtelement ist in die Basis eines kuppelförmigen Gehäusekörpers eingesetzt und weist Öffnungen zur Durchführung mehrerer Kabel auf. Die Kabel sind in dem Dichtelement gleitverschieblich geführt. Durch eine Kompression des Dichtelementes in axialer Richtung, das heißt längs der durch das Dichtelement geführten Kabel wird die Dichtmasse radial nach außen gedrängt und gegen die Gehäuseinnenwandung dichtend gepresst. Überdies bieten die die Dichtmasse begrenzenden Platten des Dichtelementes einen guten mechanischen Schutz. Auch wenn dieses bekannte Gehäuse sehr gute Schutz- und Isolationseigenschaften aufweist, so ist dieses Gehäuse doch für bestimmte Anwendungen zu aufwendig konstruiert und demzufolge mit zu hohen Herstellungskosten verbunden.

Der Erfindung liegt die Aufgabe zugrunde, ein Gehäuse für eine Kabelverbindung der eingangs genannten Gattung derart zu verbessern, dass das Gehäuse Schutz gegen manuelle Krafteinwirkung von außen im Bereich der Gehäuseöffnung gewährt, so dass das Gehäuse auch oberirdisch verlegt werden kann. Überdies soll das Gehäuse einfach und mit relativ niedrigen Herstellungskosten gefertigt werden können.

Erfindungsgemäß wird diese Aufgabe durch ein Gehäuse mit den Merkmalen des Anspruchs 1 gelöst. Bevorzugte Ausführungsformen und weitere konstruktive Verbesserungen sind in den abhängigen Ansprüchen angegeben.

Der Erfindung liegt der Gedanke zugrunde, eine Sperrplatte zum Verschließen der Gehäuseöffnung vorzusehen, wobei die Sperrplatte mit dem Gehäuse im Bereich der Gehäuseöffnung fest verbindbar ist und zumindest eine Plattenöffnung zur Kabeldurchführung aufweist. Diese Sperrplatte bringt den Vorteil, dass die Gehäuseöffnung durch ein robustes Bauteil verschlossen werden kann, so dass ein Eindringen in des Gehäuseinnere mit spitzen Gegenständen, beispielsweise mit Drähten oder dergleichen wirkungsvoll verhindert wird. Dadurch kann das Gehäuse auch oberirdisch verwendet werden, ohne befürchten zu müssen, dass Kinder das Gehäuse beschädigen und sich dabei verletzen. Außerdem kann die Sperrplatte separat vom Gehäuse hergestellt und beim Verlegen vor Ort eingesetzt werden. Die Sperrplatte kann somit eine einfache Geometrie aufweisen, so dass die Herstellungskosten nicht signifikant erhöht werden bei einer gleichzeitigen Verbesserung des Berührungsschutzes.

Vorzugsweise ist ein Kabelhalter, insbesondere eine Kabelklemme in die Plattenöffnung einsetzbar. Dieser Kabelhalter dient als Zugentlastung, wobei eventuell auftretende Zugkräfte über die mit dem Gehäuse fest verbundene Sperrplatte in dieses eingeleitet werden.

Alternativ oder zusätzlich zu dem Kabelhalter kann eine flexible Tülle in die Plattenöffnung eingesetzt werden, die die Kabel nur gegen Feuchtigkeit isoliert, aber keine Zugentlastung darstellt. Diese Ausführungsform ist mit noch niedrigeren Herstellungskosten verbunden.

Bei einer bevorzugten Ausführungsform der Erfindung ist der Außenumfang der Sperrplatte im Wesentlichen der Innenkontur des Gehäuses im Bereich der Gehäuseöffnung angepasst. Dadurch wird erreicht, dass die Sperrplatte die gesamte Querschnittsfläche des Gehäuses im Bereich der Gehäuseöffnung überdeckt und somit komplett verschließt.

Ferner kann zumindest ein Vorsprung am Außenumfang der Sperrplatte vorgesehen sein, der mit einer komplementär ausgebildeten Ausnehmung im Gehäuse in Eingriff bringbar ist. Dadurch wird die Sperrplatte auf einfache Weise mit dem Gehäuse verbunden und axial gelagert.

Außerdem können zwei gegenüber angeordnete Kanten der Sperrplatte in zwei komplementär ausgebildete Ausnehmungen im Gehäuse in Gebrauch eingreifen, wodurch eine noch bessere Fixierung der Sperrplatte im Gehäuse erreicht wird.

Die Dicke der Sperrplatte kann so bemessen sein, dass diese einem Druck von mindestens 10 N/mm² standhält. Ein mit einer derartigen Sperrplatte versehenes Gehäuse erfüllt die Anforderungen der Schutzklassifikation IP 67.

Nachfolgend wird die Erfindung mit weiteren Einzelheiten unter Bezug auf die beigefügten schematischen Zeichnungen beispielhaft näher erläutert. In diesen zeigen:
- Fig. 1: eine Draufsicht auf ein Ausführungsbeispiel eines Gehäuses nach der Erfindung;

- Fig. 2: einen Schnitt längs der Linie A - A ohne Drehverschluss;
- Fig. 3: den Schnitt nach Figur 2 ohne die Sperrplatte;
- Fig. 4: eine isometrische Ansicht der Sperrplatte;
- Fig. 5-7: Vorderansichten dreier Sperrplatten mit unterschiedlichen Proportionen

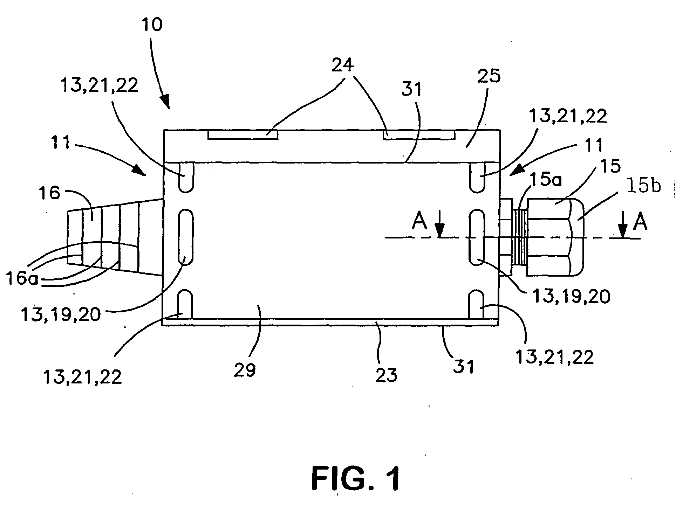

In Figur 1 ist ein Ausführungsbeispiel eines Gehäuses 10 nach der Erfindung mit seinen wichtigsten Bestandteilen dargestellt, wie es hauptsächlich zum Schutz von Kabelverbindungen insbesondere Kabelspleißverbindungen zum Einsatz kommt. Dieses Gehäuse kann sowohl oberirdisch, als auch unterirdisch verlegt werden.

Das zur Aufnahme von Inline - Spleißverbindungen geeignete Gehäuse 10 umfasst zwei Gehäuseöffnungen 11 auf, die an zwei axialen Enden des hauptsächlich in Längsrichtung erstreckten Gehäuses 10 vorgesehen sind. Die Erfindung umfasst auch Gehäuse für Stoßspleißverbindungen, bei denen nur eine Gehäuseöffnung vorgesehen ist, durch die alle ankommenden und abgehenden Kabel geführt sind. Das andere Ende des Gehäuses wäre dann als blindes Ende ausgeführt.

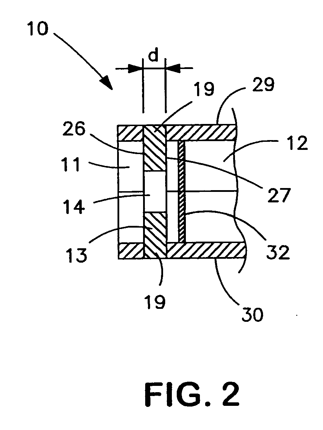

Im Gehäuse ist ein Raum 12 vorgesehen (s. Fig. 2), in dem die Kabelverbindung, insbesondere ein Kabelverbinderblock angeordnet ist, der die Kabelenden, bzw. die Aderenden der einzelnen Kabel verbindet und fixiert. Dabei kommen sowohl ein- als auch mehradrige Kabel, insbesondere Niederspannungskabel in Frage. Zum Einlegen des Kabelverbinderblockes in das Gehäuse 10 ist dieses längs geteilt und mit einem Scharnier 23 versehen. Das Scharnier 23 kann einstückig mit dem Gehäuse 10, beispielsweise als Bandscharnier ausgebildet sein. Im geschlossenen Zustand des Gehäuses 10 wird dieses durch Rastnasen 24 arretiert, die an einem Gehäuseteil des längsgeteilten Gehäuses 10 angeordnet sind. Die Rastnasen 24 hintergreifen eine seitlich am anderen Gehäuseteil angebrachte, in Längsrichtung sich erstreckende Leiste 25, so dass das Gehäuse im verschlossenen Zustand fixiert ist. Zum Öffnen des Gehäuses 10 werden die Rastnasen 24 und die Leiste 25 gelöst.

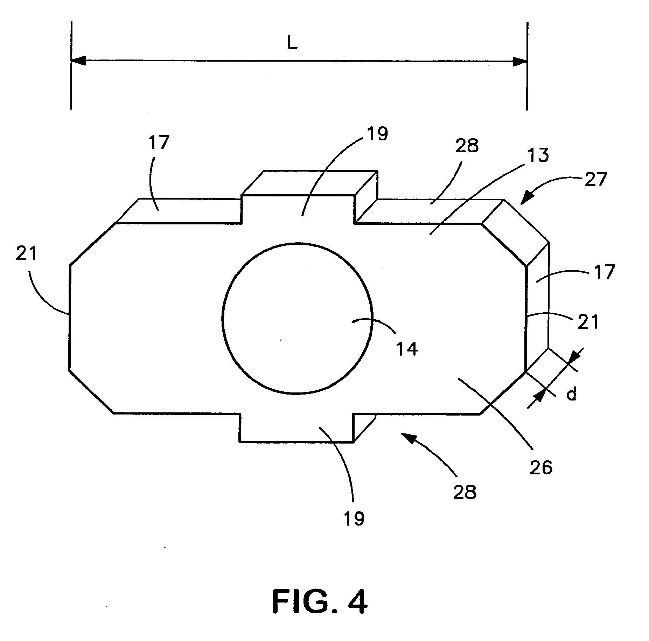

Um einen sicheren Berührungsschutz des im Gehäuse 10 befindlichen Verbinderblockes bzw. der stromführenden Kabelenden zu erreichen, ist das Gehäuse im Bereich der Gehäuseöffnung 11 durch eine Sperrplatte 13 nach den Figuren 4 bis 7 verschlossen bzw. verschließbar. Die Position der Sperrplatte 13 ist in den Figuren 1 und 2 dargestellt. Die in den Figuren dargestellte Position der Sperrplatte 13 ist beispielhaft zu verstehen. Die Sperrplatte 13 kann weiter im Gehäuseinneren bzw. näher am Gehäuserand angeordnet sein. Im Extremfall kann die Sperrplatte 13 mit dem Gehäuserand bündig abschließen. Zur Fixierung der Sperrplatte 13 im Gehäuse 10 sind Vorsprünge 19 vorgesehen, die besonders gut in den Figuren 2 und 4 bis 7 zu erkennen sind. Die Vorsprünge 19, im vorliegenden Fall zwei Vorsprünge 19, sind am Außenumfang 17 der Sperrplatte 13 ausgebildet und stehen über Seitenflächen 28 vor, die sich senkrecht zur Vorderseite 26 bzw. Rückseite 27 der Sperrplatte 13 erstrecken und diese verbinden. Die beiden Vorsprünge 19 sind dabei in Längsrichtung L der Sperrplatte 13 mittig und symmetrisch angeordnet. Wie in den Figuren 4 bis 7 dargestellt, sind die beiden Vorsprünge 19 an gegenüberliegenden Seiten bzw. Seitenflächen 28 der Sperrplatte 13 vorgesehen.

Zur Verbindung der Sperrplatte 13 mit dem Gehäuse 10 sind im Bereich der Gehäuseöffnung 11 Ausnehmungen 20 im Gehäuse 10 vorgesehen, die komplementär zu den beiden Vorsprüngen 19 ausgebildet sind. Die Ausnehmungen 20 sind in den Figuren 1, 2 und 3 dargestellt. Bei geschlossenem Gehäuse 10 sind die beiden Vorsprünge 19 im Eingriff mit den komplementär ausgebildeten Ausnehmungen 20, wodurch die Sperrplatte 13 im Gehäuse 10 fixiert ist.

Eine weitere Fixierung der Sperrplatte 13 im Gehäuse 10 erfolgt dadurch, dass zwei gegenüber angeordnete Kanten 21 der Sperrplatte 13 in zwei weitere komplementär ausgebildete Ausnehmungen 22 im Gehäuse 10 eingreifen. Die beiden Kanten 21 begrenzen die Sperrplatte in deren Längserstreckung. Dabei sind die Längsmaße der Sperrplatte 13 und zwar in Richtung des in Figur 4 gezeigten Doppelpfeils L, so bemessen, dass die Länge L der Sperrplatte etwas größer ist, als die Innenkontur bzw. die (seitlichen) Innenwände des Gehäuses 10, so dass die beiden Kanten 21 der Sperrplatte 13 in die beiden entsprechend ausgebildeten Ausnehmungen 22 im Gehäuse hineinragen. Die beiden Ausnehmungen 22 sind in den Figuren 1 und 2 dargestellt. Aus dieser Anordnung ergibt sich, dass die Sperrplatte 13 sowohl durch die beiden Vorsprünge 19, als auch durch die beiden Kanten 21 im Gehäuse 10 gehalten ist. Da die beiden Vorsprünge 19 und die beiden Kanten 21 jeweils an unterschiedlichen gegenüberliegenden Seiten der Sperrplatte 13 ausgebildet sind, ist die Sperrplatte 13, im montierten Zustand, an allen Seiten im Gehäuse 10 gelagert.

Die in Figur 1 dargestellten Ausnehmungen 20, 22 des Gehäuses 10 im Bereich der Gehäuseöffnung 11 sind über den Umfang des Gehäuses 10 gleichmäßig verteilt. Dabei sind die beiden für die Vorsprünge 19 vorgesehenen Ausnehmungen 20 an der Oberseite 29 bzw. der Unterseite 30 und die beiden für die Kanten 21 vorgesehenen Ausnehmungen 22 an den beiden Seitenflächen 31 des Gehäuses 10 angeordnet.

Die Begriffe Oberseite 29 bzw. Unterseite 30 des Gehäuses 10 beziehen sich lediglich auf die in Figur 1 dargestellte Ansicht des Gehäuses 10. Im Gebrauch können selbstverständlich andere Gehäuseflächen oben bzw. unten angeordnet sein.

Eine andere Ausbildung der Fixierungsmittel, d. h. der Vorsprünge 19 bzw. der Kanten 21 und der entsprechenden Ausnehmungen 20, 22 ist möglich. Auch die Form und Anzahl der Fixierungsmittel, insbesondere der Vorsprünge 19 kann variieren. Beispielsweise können 3, 4 oder mehr Vorsprünge oder andere Fixierungsmittel vorgesehen sein.

Eine vollständige Abdeckung der Gehäuseöffnung 10 wird insbesondere dadurch erreicht, dass der Außenumfang der Sperrplatte 13 im Wesentlichen der Innenkontur 18 des Gehäuses 10 im Bereich der Gehäuseöffnung 11 angepasst ist. Die Sperrplatte 13 überdeckt also den Querschnitt der Gehäuseöffnung 11 und unterbindet somit wirkungsvoll ein Eindringen von spitzen Gegenständen in das Gehäuseinnere. Bei dem in den Figuren 1 bis 4 dargestellten Ausführungsbeispiel bedeutet dies, dass die Sperrplatte 13 und die Gehäuseöffnung 11 einen im Wesentlichen rechteckförmigen Querschnitt aufweisen, so dass die Sperrplatte 13, wenn diese in die Gehäuseöffnung 11 eingesetzt ist, die Gehäuseöffnung 11 vollständig ausfüllt.

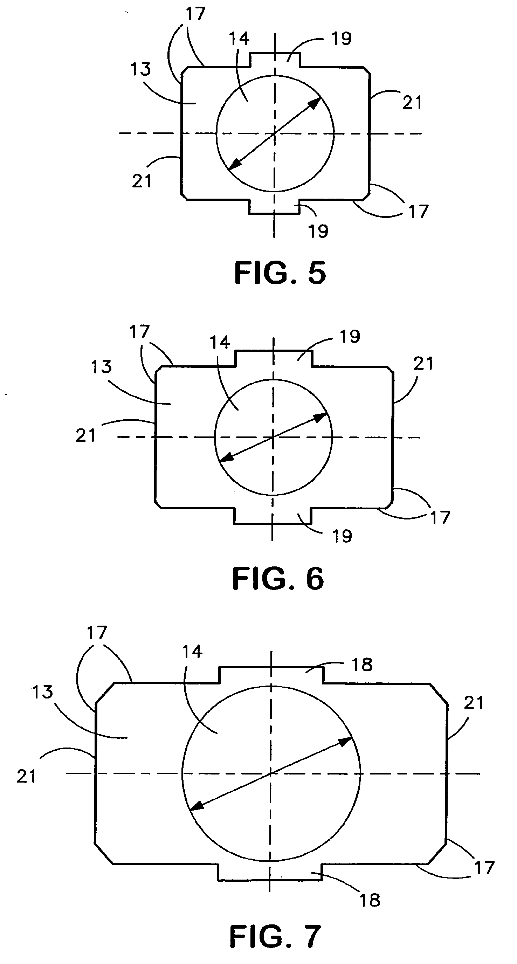

Die Form der Sperrplatte 13 kann in Abhängigkeit von der Form der Gehäuseöffnung 11 variieren. Beispielsweise kann die Längserstreckung L der Sperrplatte 13 so verringert werden, dass die beiden Kanten 21 näher aneinander angeordnet sind, wie in den Figuren 5, 6 dargestellt. In jedem Fall sollte gewährleistet sein, dass der Abstand zwischen den beiden Kanten 21 etwas größer ist als die entsprechenden, (in der Ansicht nach den Figuren 1 bis 3 seitlichen) Innenwänden des Gehäuses 10, so dass die beiden Kanten 21 der Sperrplatte 13 in die komplementär ausgebildeten Ausnehmungen 22 im Gehäuse 10 eingreifen können.

Die Sperrplatte kann auch kreisförmig oder elliptisch ausgebildet sein, wobei im Fall der kreisförmig ausgebildeten Sperrplatte mehrere Vorsprünge über den Umfang verteilt und radial sich nach außen erstreckend vorgesehen sind. Im Fall der elliptisch ausgebildeten Sperrplatte kann die Länge der großen Achse der elliptisch ausgebildeten Sperrplatte etwas größer sein als die Innenwand des Gehäuses, so dass die beiden Enden der Sperrplatte in Längserstreckung im Gehäuse ausgebildete korrespondierende Ausnehmungen hintergreifen.

Das Merkmal, wonach der Außenumfang 17 der Sperrplatte 13 im Wesentlichen der Innenkontur 18 des Gehäuses 10 im Bereich der Gehäuseöffnung 11 angepasst ist, schließt nicht aus, dass bestimmte Bereiche der Sperrplatte 13, wie beispielsweise die Vorsprünge 19 bzw. die Kanten 21 über die Innenkontur 18 des Gehäuses 10 hinausragen, um eine Fixierungsfunktion zu erfüllen.

In Figur 2 sowie in den Figuren 4 bis 7 ist ferner dargestellt, dass die Sperrplatte 13 eine Plattenöffnung 14 aufweist, die zur Kabeldurchführung dient. Die Plattenöffnung 14 ist in diesem Beispiel mittig in der Sperrplatte 13 angeordnet. Die Plattenöffnung 14 kann aber auch an anderen Stellen in der Sperrplatte 13 vorgesehen sein. Außerdem können mehr als nur eine Plattenöffnung 14 vorgesehen sein, wenn mehrere Kabel durch eine Gehäuseöffnung 11 in das Gehäuse 10 geführt werden sollen, wie dies beispielsweise bei Stoßspleißverbindungen der Fall ist.

In die Plattenöffnung 14 kann ein Kabelhalter 15, insbesondere eine Kabelklemme mit einem Drehverschluss, wie in Figur 1 dargestellt, eingesetzt werden. Als Kabelhalter 15 können herkömmliche Drehverschlüsse verwendet werden, die einen Gewinde-Klemmkörper 15a aufweisen, der durch zwei Muttern an der Vorderseite 26 und der Rückseite 27 mit der Sperrplatte 13 verschraubt ist. Durch eine Überwurfmutter 15b wird ein durch den Kabelhalter 15 geführtes Kabel (nicht gezeigt) dichtend festgeklemmt, so dass der Kabelhalter 15 sowohl als Zugentlastung, als auch als Isolation fungiert.

Anstelle des Kabelhalters 15 kann auch eine Gummitülle 16 verwendet werden, wobei die in Fig. 1 gezeigte Kombination aus Tülle 16 und Kabelhalter 15 beispielhaft zu verstehen ist. Das Gehäuse 10 kann beidseitig mit dem Kabelhalter 15 bzw. mit der Tülle 16 ausgerüstet sein. Die Tülle 16 ist kegelstumpfförmig ausgebildet und weist mehrere konzentrisch angeordnete, abgesetzte Abschnitte 16a mit unterschiedlichen Durchmessern auf. Durch Ablängen der Tülle 16 an den abgesetzten Abschnitten 16a kann der Durchmesser der Tülle 16 an den Durchmesser des in das Gehäuse 10 einzuführenden Kabels angepasst werden, so dass das Gehäuse 10 für verschiedene Kabelgrößen verwendet werden kann. Die Feuchtigkeitisolation der in das Gehäuse 10 eingeführten Kabels mittels der Tülle 16 ist besonders einfach und kostengünstig. Allerdings bietet die Tülle 16 keine Zugentlastung, so dass in diesem Fall eine geeignete Zugentlastung im Gehäuse 10 vorgesehen ist.

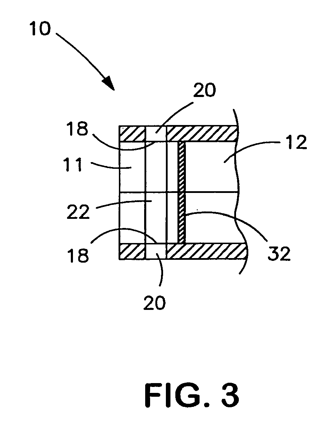

In den Figuren 2, 3 ist ferner dargestellt, dass der mit einem Isolationsgel befüllbare Raum 12 durch eine vergleichsweise dünne Dichtungswand 32 begrenzt ist. Diese Dichtungswand 32 erleichtert das Befüllen des Dichtungsraumes 12 mit Isolationsgel. Zur Kabeldurchführung wird die geteilte Dichtungswand 32 vor Ort mit einem Messer eingeschnitten und etwas umgebogen, so dass eine Öffnung zur Durchführung des Kabels entsteht. Es wäre auch denkbar, die nach den Figuren 2, 3 elastisch ausgebildete Dichtungswand 32 starr mit einer größeren Dicke auszubilden, um dadurch den Berührungsschutz zu gewährleisten. In diesem Fall müsste eine Öffnung für die Kabeldurchführung in der Dichtungswand 32 werkseitig vorgesehen werden. Demgegenüber hat das in den Figuren 1, 2 dargestellte Ausführungsbeispiel den Vorteil, dass der Raum 12 vor dem Einsetzen der Sperrplatte 13 mit einem Isolationsgel befüllt werden kann, da dieses durch die Dichtungswand 32 zurückgehalten wird. Die Dichtungswand 32 könnte auch weggelassen werden, so dass der Raum 12 durch die Sperrplatte 13 begrenzt wird. Dies hat den Vorteil, dass der Raum 13 mit dem Isolationsgel druckbefüllt werden kann, wodurch eine noch bessere Isolation der im Raum 12 angeordneten Kabelverbindung erzielt wird. Durch die im Gehäuse 10 verankerte robuste Sperrplatte 13 kann der Raum 12 mit unter Druck stehendem Isolationsgel befüllt werden, ohne dass befürchtet werden muss, dass das Isolationsgel durch die Gehäuseöffnung 11 nach außen gelangt. Es versteht sich, dass die Plattenöffnung 14 dabei durch ein Kabel dichtend verschlossen ist.

Zur Befüllung des Raumes 12 mit dem Isolationsgel wird das längsgeteilte Gehäuse 10 geöffnet, wodurch die in den beiden Gehäusehälften ausgebildeten Teilräume, die im geschlossenen Zustand den Raum 12 bilden, zugänglich werden. Alternativ kann im Gehäuse 10 ein Befüllmittel vorgesehen sein, beispielsweise ein Nippel.

Die Sperrplatte 13 kann aus Kunststoff, insbesondere PP hergestellt sein. Dabei hat sich herausgestellt, dass eine Dicke d der Sperrplatte 13 von 3 bis 7 mm, insbesondere von 4 bis 6 mm, ausreichend ist, um einen adäquaten Berührungsschutz zu gewährleisten. Generell kommt es darauf an, dass die Festigkeit der Sperrplatte so eingestellt ist, dass ein Fremdkörper mit einem Durchmesser < 1 mm nicht in das Gehäuseinnere eindringen kann, wenn der Fremdkörper mit einer Kraft von ca.10 Newton auf die Sperrplatte 13 einwirkt. Dadurch wird gewährleistet, dass die Schutzklassifikation IP 67 für gelisolierte Kabelverbindung eingehalten wird.

In Abhängigkeit von dem gewählten Material können auch andere Plattendicken eingestellt werden.

Das in den Figuren 1 bis 3 dargestellte Gehäuse ist besonders für die Aufnahme von Niederspannungskabelverbindungen geeignet. Andere Kabelverbindungen, sowohl elektrischer als auch optischer Art, bei denen es auf einen Berührungsschutz ankommt, sei es um Personen vor Verletzungen oder die Kabelverbindung vor Zerstörung zu schützen, können in dem Gehäuse ebenfalls aufgenommen werden. Um den Berührungsschutz zu verwirklichen, wird generell ein an das Gehäuse bzw. an die Gehäuseform angepasster Einsatz (Sperrplatte) an wenigsten einer Seite des Gehäuses, vorzugsweise an beiden Gehäuseseiten verwendet, der so mit dem Gehäuse verankert ist, dass die Einsätze bzw. der Einsatz mit einer Kraft beaufschlagt werden kann, ohne dass der auf den Einsatz wirkende Fremdkörper in das Gehäuse eindringt. Der bzw. die Einsätze, in der Form einer Sperrplatte bieten darüber hinaus den Vorteil, den Geldruck erhöhen zu können, so dass die Dichtungseigenschaften verbessert werden. Die Einsätze gestatten ferner eine Vergrößerung der Anwendungsmöglichkeiten, da Durchführungsöffnungen für Kabel mit unterschiedlichen Durchmessern und an verschiedenen Stellen in den Einsätzen vorgesehen sein können. Das bedeutet, dass eine vergleichsweise geringe Anzahl verschiedener Gehäusetypen bzw. Gehäusegrößen hergestellt werden kann, die mit unterschiedlichen Einsätzen, d. h. mit Einsätzen die unterschiedlichen Anwendungsmöglichkeiten im Hinblick auf Kabeldurchmesser oder Kabelanzahl oder Kabelanordnung, angepasst sind, ausgerüstet werden. Ferner erfüllen mit derartigen Einsätzen bzw. Sperrplatten versehene Gehäuse die Anforderungen der Schutzklassifikation IP 67.

Der Einsatz, bzw. die Sperrplatte ist ein separates Bauteil, das mit dem Gehäuse, insbesondere bei der Montage vor Ort, verbunden wird.

Das Gehäuse eignet sich besonders gut in Verbindung mit dem in der deutschen Anmeldung 10 2004 009 207.9 beschriebenen Kabelverbinder - Block, die von der Anmelderin hinterlegt wurde.

### Bezugszeichenliste

- 10: Gehäuse
- 11: Gehäuseöffnung
- 12: Raum
- 13: Sperrplatte
- 14: Plattenöffnung
- 15: Kabelhalter
- 15A: Gewindekörper
- 15B: Überwurfmutter
- 16: Tülle
- 17: Außenumfang
- 18: Innenkontur
- 19: Vorsprung
- 20: zum Vorsprung komplementär ausgebildete Ausnehmung
- 21: Kanten
- 22: zu den Kanten komplementär ausgebildete Ausnehmungen
- 23: Scharnier
- 24: Rastnasen
- 25: Leiste
- 26: Vorderseite der Sperrplatte
- 27: Rückseite der Sperrplatte
- 28: Seitenflächen der Sperrplatte
- 29: Oberseite des Gehäuses
- 30: Unterseite des Gehäuses
- 31: Seitenflächen des Gehäuses
- 32: Dichtungswand

## Patentansprüche

1. Gehäuse (10) für eine Kabelverbindung mit zumindest einer Gehäuseöffnung (11) zur Durchführung eines oder mehrerer ein- oder mehradriger Kabel, insbesondere Niederspannungskabel, und einem Raum (12) zur Aufnahme der Kabelverbindung, der mit einem Isolationsgel befüllbar ist,
**gekennzeichnet durch**
eine Sperrplatte (13) zum Verschließen der Gehäuseöffnung (11), wobei die Sperrplatte (13) mit dem Gehäuse (10) im Bereich der Gehäuseöffnung (11) fest verbindbar ist und zumindest eine Plattenöffnung (14) zur Kabeldurchführung aufweist.

2. Gehäuse nach Anspruch 1,
**dadurch gekennzeichnet, dass**,
ein Kabelhalter (15), insbesondere eine Kabelklemme, in die Plattenöffnung (14) einsetzbar ist.

3. Gehäuse nach Anspruch1,
**dadurch gekennzeichnet, dass**
eine flexible Tülle (16) in die Plattenöffnungen (14) einsetzbar ist.

4. Gehäuse nach einem der Ansprüche 1 bis 3,
**dadurch gekennzeichnet**, das s
der Außenumfang (17) der Sperrplatte (13) im Wesentlichen der Innenkontur (18) des Gehäuses (10) im Bereich der Gehäuseöffnung (11) angepasst ist.

5. Gehäuse nach einem der Ansprüche 1 bis 4,
**dadurch gekennzeichnet**, d a s s
zumindest ein Vorsprung (19) am Außenumfang (17) der Sperrplatte (13) vorgesehen ist, der mit einer komplementär ausgebildeten Ausnehmung (20) im Gehäuse (10) in Eingriff bringbar ist.

6. Gehäuse nach einem der Ansprüche 1 bis 5,
**dadurch gekennzeichnet**, das s
zwei gegenüber angeordnete Kanten (21) der Sperrplatte (13) in zwei komplementär ausgebildete Ausnehmungen (22) im Gehäuse (10) im Gebrauch eingreifen.

7. Gehäuse nach einem der Ansprüche 1 bis 6,
**dadurch gekennzeichnet**, das s
die Dicke (d) der Sperrplatte (13) so bemessen ist, dass diese einem Druck von mindestens 10 N/mm² standhält.
